# EUROPÄISCHE PATENTSCHRIFT

(11) **EP 1 826 253 B1**
(45) Veröffentlichungstag und Bekanntmachung des Hinweises auf die Patenterteilung: **13.02.2013**
(21) Anmeldenummer: 07001676.1
(22) Anmeldetag: 26.01.2007
(51) Int. Cl.: C09D 13/00, B43K 19/06, B43K 19/12, B43K 19/18

(54) **Farbmine für Schreib-, Zeichen- oder Malgeräte**
Colour lead for writing, drawing or painting devices
Mine de couleur pour des appareils d'écriture, de dessin ou de peinture

(30) Priorität: 27.02.2006 DE 102006010119
(43) Veröffentlichungstag der Anmeldung: 29.08.2007
(73) Patentinhaber: J.S. Staedtler GmbH & Co. KG, 90427 Nürnberg (DE)
(72) Erfinder: Thies, Andreas, 91090 Effeltrich (DE)

(56) Entgegenhaltungen:
- EP-A- 0 697 447
- EP-A- 0 712 914
- JP-A- 63 046 278
- US-A- 5 595 700
- US-B1- 6 746 524

## Beschreibung

Die Erfindung betrifft eine ungebrannte Farbmine für Schreib-, Zeichen- oder Malgeräte nach dem Oberbegriff des Hauptanspruches.

Ungebrannte Farbminen zum Schreiben, Zeichnen und/oder Malen sind prinzipiell bekannt.

Abstriche von gebrannten oder ungebrannten Farbminen nach dem Stand der Technik, besitzen eine mäßige bis sehr schlechte Radierbarkeit. Wird ein Abstrich mittels eines handelsüblichen Radiergummi entfernt, so kommt es nicht selten vor, dass das Papier so stark strapaziert wird, dass es durchreißt. Die schlechte Radierbarkeit derartiger Abstriche ist darauf zurückzuführen, dass Farbpigmente zusammen mit Wachsen und Seifen in die Oberfläche des Auftragsmediums eindringen bzw. dessen offene Porengänge zugesetzt werden. Weiter ist es bei derartigen Minen als nachteilig anzusehen, dass die Gleitfähigkeit dieser Farbminen auf dem Auftragsmedium wesentlich schlechter ist, als der Benutzer dies von Graphitminen durchschnittlicher Qualität kennt.

So ist aus der US 200210139278 A1 eine ungebrannte Farbmine bekannt, bestehend aus Farbmittel, Lösungsmittel, Füllstoff, einer ÖI/Wasser Emulsion, oberflächenaktiven Substanzen und Glimmer als Gleit- bzw. Füllstoff.
Es hat sich bei derartigen Minen als nachteilig herausgestellt, dass die Radierbarkeit zwar gegeben ist, dass aber für eine rückstandslose Entfernung des Abstrichs das Substrat stark beansprucht wird, da ein häufiges Überradieren erforderlich ist.

Weiter ist aus der JP 01232099 A eine farbige Mine zum Überstreichen von schwer entfernbaren bzw. radierbaren Abstrichen bekannt, die weißes Farbmittel, Gleitmittel, Füllstoff und weitere Zusatzstoffe aufweist.
Nachteilig ist es bei einer derartigen Mine anzusehen, dass dieser aufgetragene Korrekturabstrich sehr schlecht radierbar ist. Eine unansehnlich verschmierte Fläche ist die Folge. Ein Radieren derartiger Abstriche ist auch üblicherweise nicht angedacht. Aufgabe ist eine hohe Deckkraft und nicht die Entfembarkeit.

Weiterhin offenbart die US5595700 eine ungebrannte Mine für Schreibgeräte, bestehend aus einem farbgebenden Mittel, einem Bindemittel, Wachs oder Fett als Gleitmittel und Bornitrid aus im Wesentlichen plättchenförmigen Partikeln. Die Mine kann maximal 20 Gew.% Bornitrid aufweisen.

**Aufgabe** der Erfindung ist es daher, eine Farbmine zu schaffen, die ähnlich einem Bleistift eine sehr leichte und rückstandslose Radierbarkeit des Abstrichs sowohl auf hellen als auch auf dunklen Untergründen gewährleistet und zudem sehr gute Gleiteigenschaften auf dem Auftragsmedium oder Substrat besitzt. Weiter ist es Aufgabe der Erfindung, einen vom Bleistift typischen Graphitglanz des Abstrichs zu erreichen, wobei der Abstrich nicht nur auf hellen, sondern besonders auf dunklen Untergründen hervorragend decken soll.

Diese Aufgabe wird mit den kennzeichnenden Merkmalen gemäß Anspruch 1 gelöst. Vorteilhafte Ausgestaltungen ergeben sich aus den untergeordneten Ansprüchen.

Unter Farbminen zum Schreiben-, Zeichnen, oder Malen versteht man einerseits Minen, die fest in Holz oder andere spitzbare Materialien eingebracht werden und andererseits Minen, die verschiebbar in einer biegesteifen Hülle gehaltert sind. Beispiele hierfür sind holzgefasste Farbstifte, farbige Feinminen für mechanische Stifte, so genannte Druckbleistifte und Minen für Fall- oder Schiebestifte.
Der Minenquerschnitt kann hierbei kreisförmig, oval, drei-, sechs- oder rechteckig ausbildet sein.
Weiter ist für den erfindungswesentlichen Gedanken völlig unwesentlich ob es sich um eine Vollmine, Rohrmine oder mehrschichtige Mine handelt.

Gelöst wird diese Aufgabe dadurch, dass eine ungebrannte Farbmine für Schreib-, Zeichen- und Malgeräte mindestens aus einem farbgebenden Mittel, mindestens einem Bindemittel, mindestens einem bei Raumtemperatur festem organischen Gleitmittel und mindestens einem Füllmaterial besteht. Die Partikel des Füllmaterials sind im Wesentlichen plättchenförmig ausgebildet, wobei der Gehalt des mindestens einen Füllstoffs zwischen 30 bis 80 Gew. % beträgt, wobei dieses Füllstoff als hexagonales Bornitrid vorliegt.

Die erfindungsgemäße Mine kann ein zweites Füllmaterial aufweisen, welches mindestens ein Material aus der Gruppe der Schichtsilikate, wie z.B. Talk, Glimmer, Speckstein, Muskovit, Kaolinit und/oder Pyrophylit ist.

Als einzusetzendes Füllmaterial hat sich hexagonales Bornitrid, auch unter dem Namen "weißer Graphit", herauskristallisiert. Der kristallographische Aufbau von Bornitrid in der hexagonalen Struktur ist praktisch identisch dem Aufbau von Graphit.
Der Effekt der leichten Radierbarkeit tritt bereits bei einem Gehalt von Bornitrid ab 30 Gew. % auf. Der Gehalt an Bornitrid kann in den erfindungsgemäßen Minen bis zu 80 Gew. % betragen, ohne dass dabei die Farbintensität oder Brillanz des Abstriches leidet bzw. beeinträchtigt wird.
Der Effekt tritt ebenfalls auf, falls das eingebrachte Bornitrid teilweise, bis zu 50 Prozent, durch makrokristalline und plättchenförmige Füllstoffe aus der Gruppe der Schichtsilikate ersetzt wird.

Aufgrund der graphitähnlichen Struktur kommt es beim Abstrich auf Papier zu einem Schichtförmigen Auftrag des Minenmaterials, was das Eindringen von farbgebenden Substanzen in das Papier deutlich verringert und somit ein Abtragen des Abstrichs mit einem Radiergummi ermöglicht.

Vergleicht man die Zusammensetzung der erfindungsgemäßen Mine mit einer Mine gemäß dem Stand der Technik, so stellt man fest, dass das Bornitrid einen Teil der eingesetzten Füllstoffe ersetzt. Die an sich bekannte Zusammensetzung der Minen verändert sich dadurch unwesentlich.

Als Bindemittel können z.B. Cellulosederivate, Stärken und/oder Polyvinylalkohol eingesetzt werden.

Eingesetzte Gleitmittel können beispielsweise aus der Gruppe der langkettigen, gesättigten und ungesättigten Fettsäuren der allgemeinen Formel

H₃C - (CH₂)ₙ - (CH-CH)ₘ - (CO)ₒ - COOR

ausgewählt sein, wobei R = H, R = -CH₃, -CH₂CH₃, ... und/oder R = M⁺, M²⁺, M³⁺ Das Gleitmittel kann als Stearinsäure und/oder ein Stearat vorliegen.

Als Farbmittel können, um einige Beisiele zu nennen, organische oder anorganische Pigmente, Farbstoffe oder verlackte Farbstoffe, beschichtete Glimmer sowie beschichtete oder unbeschichtete Metallbronzen und Mischungen dieser Farbmittel eingesetzt werden.
Die Erfindung soll anhand eines Rahmenbeispiels sowie einiger Rezepturbeispiele näher erläutert werden.

### Rahmenbeispiel für eine ungebrannte Farbmine:

| | |
|---|---|
| Farbmittel | 0,5 bis 15 Gew. % |
| Bornitrid | 30 bis 80 Gew. % |
| Gleitmittel | 4,0 bis 25 Gew. % |
| Bindemittel | 2,0 bis 13 Gew. % |
| Titandioxid | 0,0 bis 15 Gew. % |
| Füllstoffe | 0,0 bis 50 Gew. % |

### Rezepturbeispiel 1 - blaue Mine

| | |
|---|---|
| Pigment Blue 15:3 | 1,5 Gew. % |
| Bornitrid | 39 Gew. % |
| Titandioxid | 8 Gew. % |
| Calciumstearat | 5 Gew. % |
| Stearinsäure | 7 Gew. % |
| Carboxymethylcellulose | 5 Gew. % |
| Glimmer | 14 Gew. % |
| Speckstein | 20,5 Gew. % |

### Rezepturbeispiel 2 - rote Mine

| | |
|---|---|
| Pigment Red 4 | 2,5 Gew. % |
| Pigment Red 57:1 | 1,0 Gew. % |
| Bornitrid | 78 Gew. % |
| Calciumstearat | 7 Gew. % |
| Stearinsäure | 7 Gew. % |
| Carboxymethylcellulose | 2,5 Gew. % |
| Titandioxid | 2,0 Gew. % |

### Rezepturbeispiel 3 - violette Mine

| | |
|---|---|
| Pigment Violette 27 | 1,5 Gew. % |
| Pigment Red 57:1 | 1,0 Gew. % |
| Bornitrid | 70 Gew. % |
| Calciumstearat | 9 Gew. % |
| Stearinsäure | 10 Gew. % |
| Cellulosederivat | 8,5 Gew. % |

### Rezepturbeispiel 4 - violette Mine (Variante)

| | |
|---|---|
| Pigment Violette 27 | 1,5 Gew.% |
| Pigment Red 57:1 | 1,0 Gew.% |
| Bornitrid | 50 Gew.% |
| Speckstein | 10 Gew.% |
| Glimmer | 10 Gew. % |
| Calciumstearat | 9 Gew.% |
| Stearinsäure | 10 Gew.% |
| Carboxymethylcellulose | 8,5 Gew.% |

Beispielhaft soll nachfolgend die **Herstellung** einer ungebrannten Farbmine dargestellt werden.
Im wesentlichen erfolgt die Herstellung in vier Verfahrensschritten, wobei in einem ersten Schritt das mindestens eine farbgebende Mittel, das mindestens eine Bindemittel, das mindestens eine Gleitmittel und der Füllstoff trocken zu einer Feststoffmischung vermischt werden, wobei in einem zweiten Schritt der Feststoffmischung 10 bis 20 Gew. % Wasser und/oder organisches Lösungsmittel bezogen auf die Mischung zugemischt werden,
wobei in einem dritten Schritt ein Granulat gebildet wird und
wobei in einem vierten Schritt das Granulat extrudiert wird.

Eine Imprägnierung der so hergestellten Mine erfolgt nicht.

## Patentansprüche

1. **Ungebrannte Farbmine** für Schreib-, Zeichen- und Malgeräte, bestehend aus mindestens einem farbgebenden Mittel, mindestens einem Bindemittel, mindestens einem bei Raumtemperatur festen organischen Gleitmittel und mindestens einem Füllmaterial, dessen Partikel im Wesentlichen plättchenförmig ausgebildet sind
**dadurch gekennzeichnet,**
**dass** die Farbmine 30 bis 80 Gew. % des mindestens einen Füllstoffs aufweist und dass der mindestens eine Füllstoff als hexagonales Bornitrid vorliegt.

2. **Farbmine** nach Anspruch 1
**dadurch gekennzeichnet,**
**dass** die Mine als ein zweites Füllmaterial mindestens ein Material der Gruppe der Schichtsilikate, wie z.B. Speckstein, Glimmer, Talk, Pyrophylit, Muskovit und/oder Kaolinit aufweist.

3. **Farbmine** nach Anspruch 1,
**dadurch gekennzeichnet,**
**dass** das Bindemittel ein wasserlösliches Cellulosederivat, Stärke und/oder Polyvinylalkohol ist.

4. **Farbmine** nach Anspruch 1,
**dadurch gekennzeichnet,**
**dass** das Gleitmittel eine Stearinsäure und/oder ein Stearat umfasst.

## Claims

1. Uncalcined colouring core for writing, drawing and colouring implements, consisting of at least one colour-dispensing means, at least one binder, at least one organic slip agent which is solid at room temperature and at least one filler, the particles of which are formed to be substantially flake-shaped, **characterised in that** the colouring core comprises 30 to 80 weight % of the at least one filler and that the at least one filler is present as a hexagonal boron nitride.

2. Colouring core according to claim 1, **characterised in that** the core comprises a second filler of at least one material from the group of layered silicates such as, for example, soapstone, mica, talc, phyrophyllite, muscovite and/or kaolinite.

3. Colouring core according to claim 1, **characterised in that** the binder is a watersoluble cellulose derivative, starch and/or polyvinylalcohol.

4. Colouring core according to claim 1, **characterised in that** the slip agent comprises a stearic acid and/or a stearate.

## Revendications

1. Mine colorée non calcinée pour ustensiles d'écriture, de dessin et de coloriage, composée d'au moins un moyen de coloration, d'au moins un liant, d'au moins un agent organique de glissement solide à température ambiante, et d'au moins une substance de charge dont les particules sont réalisées, pour l'essentiel, en forme de plaquettes,
**caractérisée par le fait**
**que** ladite mine colorée renferme de 30 à 80 % en poids de la substance de charge à présence minimale ;
et **que** ladite substance de charge, à présence minimale, revêt la forme de nitrure de bore hexagonal.

2. Mine colorée selon la revendication 1,
**caractérisée par le fait**
**que** ladite mine renferme, en tant que seconde substance de charge, au moins un matériau du groupe des silicates stratifiés comme, par exemple, de la stéatite, du mica, du talc, de la pyrophylite, de la muscovite et/ou de la kaolinite.

3. Mine colorée selon la revendication 1,
**caractérisée par le fait**
**que** le liant est un dérivé cellulosique hydrosoluble, de l'amidon et/ou de l'alcool polyvinylique.

4. Mine colorée selon la revendication 1,
**caractérisée par le fait**
**que** l'agent de glissement comprend un acide stéarique et/ou un stéarate.
